# EUROPÄISCHE PATENTSCHRIFT

(11) **EP 3 554 999 B1**
(45) Veröffentlichungstag und Bekanntmachung des Hinweises auf die Patenterteilung: **26.02.2020**
(21) Anmeldenummer: 16823182.7
(22) Anmeldetag: 14.12.2016
(51) Int. Cl.: C01B 33/035

(54) **VERFAHREN ZUR HERSTELLUNG VON POLYKRISTALLINEM SILICIUM**
PROCESS FOR PRODUCING POLYCRYSTALLINE SILICON
PROCÉDÉ DE PRODUCTION DE SILICIUM POLYCRISTALLIN

(43) Veröffentlichungstag der Anmeldung: 23.10.2019
(73) Patentinhaber: Wacker Chemie AG, 81737 München (DE)
(72) Erfinder: HERTLEIN, Harald, 84489 Burghausen (DE); KRAUS, Heinz, 84367 Zeilarn (DE)
(74) Vertreter: Belz, Ferdinand
(86) Internationale Anmeldenummer: PCT/EP2016/080897
(87) Internationale Veröffentlichungsnummer: WO 2018/108257

(56) Entgegenhaltungen:
- EP-A1- 2 551 239
- EP-A2- 2 653 446
- US-A- 2 938 772

## Beschreibung

Die Erfindung betrifft ein Verfahren zur Herstellung von polykristallinem Silicium.

Polykristallines Silicium (kurz: Polysilicium) wird üblicherweise mittels des Siemens-Verfahrens hergestellt. Dabei wird ein Reaktionsgas, umfassend eine oder mehrere Silicium enthaltende Komponenten und Wasserstoff, in einen in der Regel glockenförmigen Reaktor (Siemens-Reaktor) eingeleitet. Der Reaktor enthält meist einen oder mehrere Trägerkörper (Dünnstäbe, Filamentstäbe) aus Silicium, welche durch direkten Stromdurchgang erhitzt werden. An diesen Trägerkörpern scheidet sich durch Pyrolyse Silicium in fester Form ab. Es bilden sich Stäbe aus Polysilicium. Als Silicium enthaltende Komponente können Silan (SiH4), Monochlorsilan (SiH₃Cl), Dichlorsilan (SiH₂Cl₂), Trichlorsilan (SiHCl₃), Tetrachlorsilan (SiCl₄) oder Mischungen der genannten Stoffe eingesetzt werden.

Granulat aus polykristallinem Silicium kann eine Alternative sein zu Polysilicium, das nach dem Siemens-Verfahren hergestellt wird. Während das Polysilicium im Siemens-Verfahren in der Regel als zylindrischer Siliciumstab anfällt, der vor seiner Weiterverarbeitung üblicherweise zerkleinert wird, besitzt Polysiliciumgranulat Schüttguteigenschaften.

Während der Abscheidung des elementaren Siliciums entsteht Abgas, das sich aus nicht umgesetztem Reaktionsgas und gasförmigen Nebenprodukten, insbesondere Halogensilane, zusammensetzt. Der Aufbereitung dieses Abgases, insbesondere der Rückgewinnung von unverbrauchtem Wasserstoff, gilt aus Kostengründen vermehrte Aufmerksamkeit.

Die Aufbereitung des bei der Siliciumabscheidung entstehenden Abgases ist grundsätzlich bekannt, beispielsweise aus EP 2 551 239 A1. Entsprechende Kreisprozesse können ferner den Abbildungen 7 und 8 auf Seite 58 in O'Mara, B. Herring, L. Hunt: Handbook of Semiconductor Silicon Technology; ISBN 0-8155-1237-6 entnommen werden.

Üblicherweise wird das Abgas einer mehrfachen Kondensationsvorrichtung zugeführt, wobei das Kondensat über eine Destillationskolonne in niedersiedende und hochsiedende Anteile aufgetrennt wird. Die niedersiedenden Anteile werden wieder der Abscheidung zugeführt. Die hochsiedenden Anteile beinhalten in der Regel einen großen Teil Siliciumtetrachlorid (STC), das in einer Konvertierungsvorrichtung (Konverter) zu Trichlorsilan (TCS) umgewandelt werden kann.

Die nach der Kondensation verbleibenden gasförmigen Anteile des Abgases werden einer Adsorption zugeführt. Hier wird der Wasserstoff von den anderen Bestandteilen des Gasstromes abgetrennt und als Kreisgas wieder dem Abscheideprozess zugeführt. Zusätzlich kann dem Kreisgas auch Frischwasserstoff (extern erzeugt oder bereitgestellt), beispielsweise erzeugt mittels eines Steamreformers, zugesetzt werden. Zusätzlich oder alternativ können Bestandteile des Reaktionsgases zugesetzt werden.

Aus technischen Gründen, beispielsweise unvermeidbare Leckagen und Stickstoff enthaltende Toträume, ist eine Betriebsweise ohne einen Eintrag von Stickstoff in das Kreisgassystem grundsätzlich nicht möglich. Auch führt der Umstand, dass aus Sicherheitsgründen (Vermeidung einer Knallgasreaktion) vor und nach jeder Inbetriebnahme mit Stickstoff gespült werden muss, zu einem Eintrag von Stickstoff in das Kreisgassystem. In Toträumen wie beispielweise Stichleitungen zu Messgeräten verbleiben nämlich üblicherweise Stickstoffreste, die dann bei Inbetriebnahme in das Kreisgassystem gelangen.

Polysilicium dient als Ausgangsmaterial für die Herstellung von einkristallinem Silicium mittels Tiegelziehen (Czochralski (CZ)-Verfahren)- oder mittels Zonenschmelzen (Floatzone (FZ)-Verfahren). Dieses einkristalline Silicium wird in Scheiben (Wafer) zertrennt und nach einer Vielzahl von mechanischen, chemischen und chemomechanischen Bearbeitungen in der Halbleiterindustrie verwendet. Polysilicium wird ferner zur Herstellung von ein- oder multikristallinem Silicium mittels Zieh- oder Gießverfahren benötigt, welches der Fertigung von Solarzellen dient.

Ein wesentliches Problem bei der Herstellung von einkristallinem Silicium sind Versetzungsfehler (eindimensionale, d.h. linienförmige Störungen) und Stapelfehler (zweidimensionale, d.h. flächenhafte Störungen) im Kristallaufbau der erhaltenen Siliciumkristalle. Beide Phänomene verringern die Ausbeute, da sich grundsätzlich nur Siliciumkristalle zum Einsatz in der Photovoltaik- und Elektronikindustrie eignen, die eine bestimmte Kristallfehleranzahl nicht überschreiten. Üblicherweise soll die Anzahl an Stapelfehlern bei Siliciumwafern bei weniger als 300 pro Quadratzentimeter liegen. Bei einkristallinen Siliciumstäben sollte grundsätzlich weniger als ein Versetzungsfehler pro Meter Stablänge vorliegen bzw. die versetzungsfreie Stablänge größer als 70% sein.

Aus EP 2 653 446 A2 ist bekannt, dass der Stickstoffgehalt eines als Ausgangsmaterial eingesetzten Polysiliciums einen negativen Einfluss auf das Kristallwachstum hat. Daher wird ein Stickstoffgehalt in einem Bereich zwischen 10 und 2000 ppba (parts per billion atoms) vorgeschlagen, um die Qualität der Folgeprodukte nicht maßgeblich zu beeinträchtigen. Bisher wurde angenommen, dass der während der Abscheidung des Polysiliciums anwesende Stickstoff, beispielsweise aus dem Kreisgas, inert im Kristallgitter eingebaut (gelöst) wird und die Qualität des erhaltenen Polysiliciums nur durch eine n-Dotierung beeinflusst.

Es wurde aber überraschend beobachtet, dass bei der Polysiliciumherstellung mit steigender Abscheidetemperatur die Produktqualität des Polysiliciums abnimmt, wobei die Ursache für diesen Zusammenhang bisher ungeklärt blieb. Zumindest konnte bei einer SIMS (Sekundärionen-Massenspektrometrie)-Analyse von Polysilicium, das mit unterschiedlichen Stickstoffkonzentrationen im Reaktionsgas abgeschieden wurde, keine erhöhte inerte Einlagerung von Stickstoff festgestellt werden.

Aus diesem Grund wird bei der Polysiliciumherstellung die Abscheidetemperatur in der Regel nicht über einen kritischen Wert von etwa 1030°C erhöht. Bis zu dieser Temperatur wurde keine wesentliche Verschlechterung der Produktqualität festgestellt. Üblich sind Temperaturen unterhalb von etwa 1010°C. Aus Gründen der Wirtschaftlichkeit wäre es allerdings wünschenswert die Abscheidetemperatur zu erhöhen, da damit eine höhere Reaktionsgeschwindigkeit und folglich eine gesteigerte Reaktorausbringung einhergehen würde.

Die der vorliegenden Erfindung zugrunde liegende Aufgabe bestand darin, Polysilicium bereitzustellen, das bei seiner Weiterverarbeitung keine oder nur eine geringe Anzahl an Versetzungs- und Stapelfehlern im Folgeprodukt verursacht. Das Polysilicium sollte zudem mit einem besonders wirtschaftlichen Verfahren herstellbar sein.

Diese Aufgabe wird gelöst durch ein Verfahren mit den Merkmalen des Anspruchs 1.

Das erfindungsgemäße Verfahren wird üblicherweise in einem Siemens-Reaktor durchgeführt. Dieser umfasst vorzugsweise eine metallische Bodenplatte und eine kühlbare Glocke, die auf die Bodenplatte aufgesetzt ist, so dass ein Reaktionsraum im Inneren der Glocke entsteht. Die Bodenplatte kann mit einer oder mehreren Gaseinlassöffnungen für das Reaktionsgas und einer oder mehreren Gasauslassöffnungen für Abgas versehen sein. Ferner ist sie üblicherweise mit Elektrodenhalterungen versehen. In der Elektrodenhalterung ist gewöhnlich ein Verbindungsträger, üblicherweise aus Graphit, eingesetzt, der mit einer Bohrung zur Aufnahme des Trägerkörpers versehen ist. Der Verbindungsträger, der auch als Graphitelektrode bezeichnet werden kann, fixiert den Trägerkörper. In EP 2 077 252 A2 ist ein typischer Aufbau eines Siemens-Reaktors beschrieben.

Der Trägerkörper umfasst vorzugsweise zwei Filamentstäbe und eine Brücke, welche die Filamentstäbe jeweils an einem ihrer freien Enden miteinander verbindet. Die beiden übrigen freien Enden der Filamentstäbe werden üblicherweise von jeweils einer Elektrodenhalterung aufgenommen. Der Trägerkörper besteht bevorzugt aus ein- oder polykristallinem Silicium. Er kann allerdings auch aus Metallen, Legierungen und/oder Kohlenstoff bestehen. Vorzugsweise ragen die Filamentstäbe senkrecht aus den Elektrodenhalterungen in den Reaktionsraum. Über die Elektrodenhalterung erfolgt grundsätzlich der Anschluss an die Stromversorgung. An dem erhitzten Trägerkörper, insbesondere an den erhitzten Filamentstäben und der Brücke, scheidet sich im Verfahrensverlauf Polysilicium ab, was zu einem Anwachsen des Durchmessers des Trägerkörpers führt. Auf diese Weise kann sich ein, insbesondere U-förmiger, Polysiliciumstab bilden.

Kontinuierliche (Kreis-)Prozesse zur Aufbereitung von Abgasen bzw. Rückgewinnung von Wasserstoff bei der Herstellung von Polysilicium und die entsprechenden Kreisgassysteme sind grundsätzlich bekannt. Hier kann beispielsweise auf die EP 2 551 239 A1 verwiesen werden.

Überraschenderweise hat sich herausgestellt, dass bereits bei Abscheidetemperaturen zwischen 1030 und 1150°C der, insbesondere im Kreisgas enthaltene, Stickstoff zu einer Bildung von Si₃N₄ auf der Oberfläche des Polysiliciums führt. Die Geschwindigkeit der Bildung von Si₃N₄ nimmt mit steigender Abscheidetemperatur exponentiell zu. Zudem wurde erkannt, dass sich bereits geringe Mengen von < 10 ppba Si₃N₄ im Polysilicium negativ auf die Qualität von Folgeprodukten wie ein- oder multikristallines Silicium auswirken.

Es wird angenommen, dass Si₃N₄-Kristallite im Inneren und auf der Oberfläche des Polysiliciums aufgrund ihres hohen Schmelzpunktes bei Folgeprozessen wie Zieh- oder Gießverfahren nicht aufschmelzen und so die Versetzungs- und Stapelfehler im Folgeprodukt verursachen. Allerdings ist der zugrundeliegende Mechanismus noch nicht abschließend geklärt.

Gemäß einer bevorzugten Ausführungsform beträgt der Stickstoffgehalt im Kreisgas weniger als 500 ppmv (parts per million by volume), bevorzugt weniger als 100 ppmv, besonders bevorzugt weniger als 10 ppmv, insbesondere weniger als 0,5 ppmv.

Der geringere Stickstoffgehalt im Kreisgas ermöglicht es mit besonderem Vorteil, den Reaktor mit höheren Abscheidetemperaturen, insbesondere oberhalb von 1030°C, zu betreiben als dies bei aus dem Stand der Technik bekannten Reaktoren üblich ist. Die erhöhte Abscheidetemperatur führt zu einer erhöhten Reaktionsgeschwindigkeit und damit zu einer Erhöhung der Reaktorausbringung. Die Wirtschaftlichkeit des Verfahrens wird somit verbessert, ohne dass die Produktqualität beeinträchtigt wird.

Vorzugsweise erfolgt die Abscheidung des elementaren Siliciums bei einer Abscheidetemperatur zwischen 1030 und 1300°C, bevorzugt zwischen 1032 und 1250°C, besonders bevorzugt zwischen 1040 und 1200°C, insbesondere zwischen 1060 und 1150°C.

Die Abscheidung des Polysiliciums wird generell durch die Vorgabe einer Temperatur, der Abscheidetemperatur, und/oder durch Zusammensetzung und Menge des Reaktionsgases gesteuert.

Die Abscheidetemperatur ist im Siemens-Verfahren von entscheidender Bedeutung hinsichtlich Produktqualität und Wirtschaftlichkeit des Verfahrens. In allen Siemens-Reaktoren ist dabei zu beachten, dass die Abscheidetemperatur stark abhängig ist vom Messort und der Messmethode. Darüber hinaus ist die Abscheidetemperatur eine Funktion der Chargenlaufzeit und damit auch des Stabdurchmessers. In der Regel wird die Abscheidetemperatur über die Chargenlaufzeit mit zunehmendem Stabdurchmesser um einen Betrag zwischen 0 und 150°C abgesenkt.

Der hier verwendete Begriff der Abscheidetemperatur wird definiert als die mittlere Stabtemperatur über die gesamte Chargenlaufzeit, wobei die Stabtemperatur an der Oberfläche eines Siliciumstabes gemessen wird bzw. des zu Beginn vorhandenen Trägerkörpers.

Die Einzeltemperaturmessungen, aus welchen die mittlere Stabtemperatur gebildet wird, erfolgen in der Regel an der Oberfläche von Siliciumstäben, die nicht in unmittelbarer Nähe zur Reaktorwand angeordnet sind. Gemessen wird meist bei einer Stabhöhe zwischen 14 und 63%, bevorzugt 20 und 40%, der gesamten Stablänge ausgehend von dem in der Elektrodenhalterung verankerten Ende des Stabes. Typische Messhöhen liegen zwischen 0,5 und 1,5 m, vorzugsweise bei etwa 1 m. Üblicherweise erfolgt die Messung an einem inneren Stab oder Stabkreis, beispielsweise am zweiten Stab oder Stabkreis ausgehend von der Reaktorwand. Die Messung erfolgt in der Regel mit einem Pyrometer oder einer Wärmebildkamera, beispielsweise mit einer Mittelwertbildung über eine Messfläche zwischen 1 und 90 cm², bevorzugt zwischen 1 und 30 cm², insbesondere von etwa 2,5 cm². Grundsätzlich kann die Mittelwertbildung auch an mehreren Stäben durchgeführt werden.

Generell wurde festgestellt, dass die Stabtemperatur im oberen Stabdrittel größer ist als im unteren Stabdrittel. Ferner ist bei Staboberflächen, die in Richtung des Zentrums des Reaktionsraumes gerichtet sind, generell die Stabtemperatur höher als bei Staboberflächen, die in Richtung der Reaktorwand zeigen. Bei unebenen Staboberflächen ist zudem die Stabtemperatur in Vertiefungen generell höher als auf Erhebungen.

Als sogenannte "Hotspot-Temperatur" wird die heißeste auf der Staboberfläche gemessene Temperatur bezeichnet. Der Messort kann dabei über die Chargenlaufzeit mehrfach wechseln. Beispielsweise werden im Bereich der Brücke grundsätzlich höhere Stabtemperaturen gemessen, da in diesem Bereich die elektrische Stromdichte am größten ist.

Grundsätzlich geht mit einer Erhöhung der Abscheidetemperatur eine Erhöhung der Hotspot-Temperatur einher. Zur Bildung von Si₃N₄ kann es ab einer Stabtemperatur von etwa 1080°C kommen.

Da die Hotspot-Temperatur größer ist als die Abscheidetemperatur, kann auch bei Abscheidetemperaturen unterhalb von 1080°C Si₃N₄ entstehen. Da sich der Ort auf den Siliciumstäben, an welchem die Hotspot-Temperatur auftritt, in Abhängigkeit von der Abscheidezeit ändert (z.B. Brücke oder in der Elektrodenhalterung verankertes Ende eines Stabes), ist die Hotspot-Temperatur als Regelgröße üblicherweise ungeeignet. Sie ist jedoch eine wichtige Kenngröße, die Auskunft darüber gibt, ob bei einer eingestellten Abscheidetemperatur an bestimmten Orten auch eine für die Bildung von Si₃N₄ ausreichende Temperatur herrscht. Es hat sich gezeigt, dass bei einer Abscheidetemperatur von über 1030°C in der Regel auch eine Hotspot-Temperatur von 1080°C anliegt, weshalb die Abscheidetemperatur von 1030°C auch als für die Bildung von Si₃N₄ kritische Temperatur bezeichnet wird.

Die Abscheidetemperatur kann durch Steuerung der elektrischen Leistung entweder fest oder in Abhängigkeit des Polysiliciumstabdurchmessers und/oder der Zeit vorgegeben werden. Die Zusammensetzung und die Menge des Reaktionsgases können in Abhängigkeit von der Zeit und/oder dem Polysiliciumstabdurchmesser vorgegeben werden.

Gemäß einer bevorzugten Ausführungsform des Verfahrens wird der Stickstoffgehalt des Kreisgases mittels einer Messvorrichtung bestimmt. Insbesondere handelt es sich bei der Messvorrichtung um einen Gaschromatograph. Hierfür kann aus dem Reaktionsraum und/oder dem Kreisgassystem eine Probe entnommen und der Messvorrichtung zugeführt werden. Die Messvorrichtung kann auch direkt am Ort der Probenentnahme vorgesehen sein.

Die Probenentnahme erfolgt vorzugsweise an einer Stelle des Kreisgassystems, an welcher das Abgas aus dem Reaktor abgeführt oder an welcher das Kreisgas dem Reaktor wieder zugeführt wird. Auch eine Kombination dieser beiden Möglichkeiten ist denkbar. Alternativ oder zusätzlich kann es vorgesehen sein, eine oder mehrere Proben an verschiedenen Stellen des Kreisgassystems, beispielsweise vor oder hinter (stromauf- oder stromabwärts) einer Adsorptionsvorrichtung, zu entnehmen.

Gemäß einer weiteren Ausführungsform erfolgt bei Überschreiten eines Stickstoffgrenzwerts zwischen 0,01 und 1000 ppmv eine Abschaltung des Reaktors. Auf diese Weise kann sichergestellt werden, dass abgeschiedenes Polysilicium nicht durch Si₃N₄ verunreinigt wird.

Vorzugsweise wird bei Überschreiten des Stickstoffgrenzwerts die Zufuhr des Kreisgases in den Reaktor unterbrochen und das Verfahren so lange ausschließlich mit externem Wasserstoff betrieben, bis der Stickstoffgrenzwert wieder unterschritten ist. Unter externem Wasserstoff ist dabei insbesondere Wasserstoff zu verstehen, der aus einer externen Quelle zugeführt wird. Bei der externen Quelle kann es sich beispielsweise um einen Vorratsbehälter oder um eine Vorrichtung zur Dampfreformierung handeln. Vorzugsweise handelt es sich um hochreinen Wasserstoff, insbesondere Wasserstoff der Qualität 3.0 oder höher, beispielsweise 5.0.

Ferner kann die Unterbrechung des Abscheideprozesses durch schließen der Reaktionsgaszufuhr erfolgen, wobei die Abscheidetemperatur über 900°C gehalten wird. Bei Unterschreiten des Stickstoffgrenzwerts kann die Zugabe des Reaktionsgases nach Einstellung der gewünschten Abscheidetemperatur wieder aufgenommen werden.

Das Kreisgassystem wird vorzugsweise in der Zeit bis zu einer Unterschreitung des Grenzwertes vollständig von dem Reaktionsraum des Reaktors abgekoppelt. Bevorzugt wird dabei das Kreisgassystem so lange mit externem Wasserstoff gespült bis der Stickstoffgrenzwert unterschritten wird. Ist dem Kreisgassystem keine Messvorrichtung zugeordnet, kann die Spüldauer auch für einen bestimmten Zeitraum, beispielsweise eine Stunde, festgelegt werden. Es ist auch möglich, die Spülung des Kreisgassystems mit einem von Stickstoff verschiedenen Gas, beispielsweise einem Edelgas wie Argon oder Helium, durchzuführen. Bei Unterschreiten des Stickstoffgrenzwerts kann die Zugabe des externen Wasserstoffs teilweise wieder gestoppt und das Verfahren erneut unter Verwendung von Kreisgas durchgeführt werden.

Gemäß einer weiteren Ausführungsform ist es vorgesehen, dass bei Überschreiten des Stickstoffgrenzwerts zwischen 0,01 und 1000 ppmv die Abscheidetemperatur reduziert wird bis der Stickstoffgrenzwert wieder unterschritten ist. Die Erniedrigung der Abscheidetemperatur kann durch eine Reduzierung der elektrischen Leistung erfolgen. Vorzugsweise wird der Grenzwert im Zugas des Reaktors gemessen.

Dem Kreisgas können bis zu 90%, bevorzugt bis zu 40%, besonders bevorzugt bis zu 10%, externer Wasserstoff zugesetzt werden. Je mehr Wasserstoff aus dem Abgas zurückgewonnen werden kann, desto geringer ist der Anteil an externem Wasserstoff, der zugesetzt werden muss.

Gemäß einer bevorzugten Ausführungsform handelt es sich bei dem Halogensilan als Bestandteil des Reaktionsgases um ein Chlorsilan, insbesondere Trichlorsilan (TCS), oder ein Gemisch von Trichlorsilan (TCS) und Dichlorsilan (DCS).

Der spezifische Molenstrom an Halogensilan liegt vorzugsweise in einem Bereich zwischen 0,2 bis 15 kmol/h, bevorzugt 0,4 bis 8 kmol/h, pro Quadratmeter der Staboberfläche. Der Molanteil der Halogensilane im Zugasstrom liegt zwischen 10 und 50%.

Das Reaktionsgas wird vorzugsweise über eine oder mehrere, insbesondere am Boden des Reaktors, beispielsweise in der Bodenplatte, angeordnete, Düsen in den Reaktionsraum eingeblasen.

Es ist bevorzugt, dass vor Beginn des Verfahrens - bevor der Reaktor angefahren wird - innerhalb des Reaktors ein Druckaufbau mit Wasserstoff (Wasserstoffspülung) gefolgt von einem Druckabbau erfolgt. Vorzugsweise liegt dabei ein Maximaldruck beim Druckaufbau im Bereich zwischen 3,1 und 15,0 bar, bevorzugt zwischen 5,0 und 9,0 bar, besonders bevorzugt zwischen 6,0 und 8,0 bar, insbesondere bei etwa 7,0 bar. Ein Minimaldruck beim Druckabbau liegt vorzugsweise im Bereich zwischen 1,1 und 3,0 bar, insbesondere bei etwa 1,4 bar. Besonders bevorzugt erfolgt dieser Druckaufbau und Druckabbau mehrmals hintereinander, insbesondere dreimal hintereinander.

Das Kreisgassystem kann von diesem Druckauf- und Druckabbau umfasst sein. Vorzugsweise ist allerdings vorgesehen, dass das Kreisgassystem vor dem Druckauf- und Druckabbau vom Reaktionsraum abgekoppelt wird und gegebenenfalls ein separates Spülprogramm, insbesondere mit Wasserstoff, durchläuft.

Vorzugsweise dauert sowohl der Druckaufbau als auch der Druckabbau zwischen 1 und 60 Minuten, besonders bevorzugt zwischen 10 und 30 Minuten. Für ein dreimaliges durchlaufen dieser Prozedur müssten entsprechend zwischen 6 und 360 Minuten kalkuliert werden.

Der Druckaufbau erfolgt bevorzugt mit einem Wasserstoffvolumenstrom (Normkubikmeter [m³] pro Stunde [h]) pro Reaktorvolumen (V_{R} [m³]) zwischen 5 und 400 m³/hV_{R}, bevorzugt zwischen 8 und 250 m³/hV_{R}, besonders bevorzugt zwischen 10 und 100 m³/hV_{R}, insbesondere von etwa 20 m³/hV_{R}. Für einen Reaktor mit einem Reaktordurchmesser von 2,0 m und einer Reaktorhöhe von 4,0 m entspricht dies beispielsweise einem Wasserstoffvolumenstrom von 6250 m³/h.

Ferner kann es bevorzugt sein, dass vor der oben genannten Wasserstoffspülung zunächst eine Spülung des Reaktors mit einem Inertgas, beispielsweise Edelgas oder Stickstoff, erfolgt, um noch enthaltenen Sauerstoff zu entfernen. Insbesondere kann sich an diese Spülung noch ein Heizschritt anschließen, bei welchem die Trägerkörper, vorzugsweise mittels eines Strahlungsheizers, aufgeheizt werden. Auf diese Weise kann erreicht werden, dass die Trägerkörper elektrisch leitfähig werden und anschließend durch direkten Stromdurchgang über die Elektrodenhalterung weiter erhitzt werden können. An diesen Heizschritt kann sich dann die Wasserstoffspülung anschließen.

Ein weiterer Aspekt der Erfindung betrifft polykristallines Silicium, insbesondere in Stabform, d.h. polykristalliner Siliciumstab, mit einem Stickstoffanteil von weniger als 2 ppba. Besonders bevorzugt weist es einen Stickstoffanteil von weniger als 1 ppba, insbesondere weniger als 0,5 ppba, auf.

Vorzugsweise handelt es sich um polykristallines Silicium, das nach dem Siemens-Verfahren hergestellt ist.

Bevorzugte Messmethoden zur Bestimmung des Stickstoffanteils sind SIMS (Sekundärionen-Massenspektrometrie), FTIR (Fourier-Transform-Infrarot-Spektroskopie) und/oder die Analyse mittels eines Sauerstoff-/Stickstoff-/Wasserstoffanalysators (z.B. ONH836-Serie der Firma LECO).

Bei dem polykristallinen Silicium konnte mittels Rasterelektronenmikroskopie (REM) und energiedispersiver Röntgenspektroskopie (EDX) kein Si₃N₄ nachgewiesen werden.

Vorzugsweise ist das erfindungsgemäße polykristalline Silicium, insbesondere unter Berücksichtigung der Nachweisgrenzen der oben genannten Messmethoden, frei von Si₃N₄. So gilt das erfindungsgemäße polykristallineSilicium beispielsweise als frei von Si₃N₄, wenn bei 200 durchgeführten SIMS Analysen kein Si₃N₄ detektiert wurde.

Der mit Hilfe einer Neutronenaktivierungsanalyse oder Röntgenfluoreszenzanalyse gemessene Chlorgehalt des polykristallinen Siliciums beträgt bevorzugt zwischen 0,001 bis 0,2 ppmw, besonders bevorzugt 0,005 bis 0,1 ppmw und ganz besonders bevorzugt 0,01 bis 0,08 ppmw.

Ein weiterer Aspekt der Erfindung betrifft die Verwendung des polykristallinen Siliciums zur Herstellung von ein- oder multikristallinem Silicium.

Das einkristalline Silicium weist bevorzugt eine Anzahl an Stapelfehlern von weniger als 300, bevorzugt weniger als 200, besonders bevorzugt weniger als 100, insbesondere weniger 10 pro Quadratzentimeter, auf.

Das einkristalline Silicium weist bevorzugt eine Anzahl an Versetzungsfehlern von weniger als 3, bevorzugt weniger als 1, besonders bevorzugt weniger als 0,3, insbesondere weniger als 0,1, pro Meter Stablänge auf.

Vorzugsweise wird das Polysilicium zur Herstellung von Einkristallen nach dem Czochralski- oder Floatzone-Verfahren verwendet.

Einkristallines Silicium hergestellt aus erfindungsgemäßem polykristallinem Silicium mittels Tiegelziehen (Czochralski (CZ)-Verfahren) weist bevorzugt eine versatzfreie Länge der Einkristalle von größer 70%, bevorzugt größer 83%, besonders bevorzugt größer 87%, noch bevorzugter größer 90%, insbesondere größer 95%, auf.

Ferner bevorzugt ist die Verwendung des erfindungsgemäßen Polysiliciums zur Herstellung von multikristallinem Silicium mittels Blockguss- oder Stranggussverfahren, multikristalliner Blockerstarrung in einem Bridgman-Ofen (Bridgman-Stockbarger-Methode), Vertical-Gradient-Freeze (VGF)-Prozess, Ribbon-Growth-Prozess, Edge-defined Film-fed growth (EFB)-Prozess und Direct Wafer™ -Verfahren (Fa. 1366technologies).

Multikristallines Silicium hergestellt aus dem erfindungsgemäßen polykristallinen Silicium weist eine erhöhte Materialqualität auf. Die Ursache für die verbesserte Materialqualität ist im Detail noch nicht genau verstanden. Bekannt ist, dass bei Überschreiten der Löslichkeit von Stickstoff im Silicium Si₃N₄-Abscheidungen gebildet werden. Diese treten in Form von kristallinem, nadelförmigen und faserartigen Kristallen auf. Sie können vereinzelt oder in Form von Clustern auftreten, oftmals in Verbindung mit Siliciumcarbid Abscheidungen. Die kristallinen Abscheidungen entstehen beispielsweise an Tiegelwänden während des Tiegelziehens. Es wird vermutet, dass Si₃N₄-Partikel im Polysilicium als Keimpartikel in der Schmelze des Tiegels fungieren und bei der Erstarrung zum multikristallinen Siliciumblock als Si₃N₄-Partikel in den Multikristall eingebaut werden. Si₃N₄ ist elektrisch nicht leitend, allerdings zeigen sich entlang von Si₃N₄-Kristalliten im multikristallinen Silicium erhöhte Rekombinationsaktivitäten, welche die Ladungsträgerlebensdauer beeinträchtigen oder Kurzschlüsse verursachen können. Dies führt zu einer geringeren Materialqualität des multikristallinen Siliciums.
**Fig. 1** zeigt das Diagramm einer Anlage zur Durchführung des erfindungsgemäßen Verfahrens.
**Fig. 2** zeigt einen Querschnittsausschnitt eines Siemens-Reaktors zur Durchführung des erfindungsgemäßen Verfahrens.

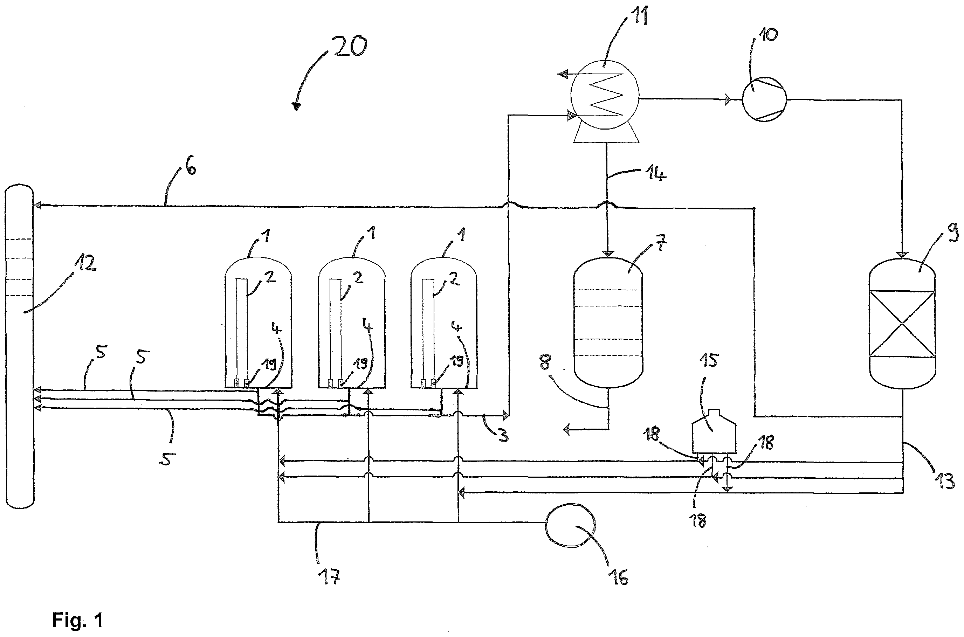

Die Anlage 20 gemäß Fig. 1 umfasst drei Siemens-Reaktoren 1 mit jeweils 56 Trägerkörpern angedeutet durch jeweils einen U-förmigen Trägerkörper 2, der in Elektrodenhalterungen 19 verankert ist. Jeder Reaktor 1 verfügt an seinem Reaktorboden 4 über eine Abgasleitung 3, mit der Abgas aus dem Reaktor 1 abgeführt wird.

Über eine Gasleitung 17 wird den Reaktoren 1 ein TCS/DCS-Gemisch zugeführt. Das TCS/DCS-Gemisch wird einer Zuleitung 16 entnommen.

Vor den Eintritt in die Reaktoren 1 wird dem TCS/DCS-Gemisch über Leitungen 18 und 13 externer Wasserstoff aus einem Vorratsbehälter 15 und/oder Kreisgas über die Leitung 13 aus dem Adsorber 9 zugemischt. Bei dem externen Wasserstoff handelt es sich um Wasserstoff, der eine Reinheit von 5.0 aufweist.

Das aus den Reaktoren 1 über die Abgasleitung 3 abgeführte Abgas wird einem Wärmetauscher 11 zugeführt. Im Wärmetauscher 11, der üblicherweise mehrere Kondensationsstufen umfasst, erfolgt eine Auftrennung in hochsiedende Bestandteile (z.B. Wasserstoff und Verunreinigungen wie Phosphane, Methan, Stickstoff und Arsenverbindungen) und tiefsiedende Bestandteile (z.B. Halogensilane). Die hochsiedenden Bestandteile des Abgases werden einem Verdichter 10 zugeführt, der die Aufgabe hat, das Druckniveau der gasförmigen Bestandteile so weit zu erhöhen, dass der enthaltene Wasserstoff später wieder den Reaktoren 1 zugeführt werden kann. Anschließend gelangen die hochsiedenden Bestandteile (der noch verunreinigte Wasserstoff) in einen Adsorber 9, der die Aufgabe hat, Verunreinigungen wie Phosphorverbindungen (z.B. Phosphane), Methan, Chlorwasserstoff und/oder Arsenverbindungen zu entfernen. Aus dem Adsorber 9 gelangt der zurückgewonnene Wasserstoff dann über die Gasleitungen 13 als Kreisgas zurück in die Reaktoren 1.

Bei der Anordnung aus Abgasleitung 3, Wärmetauscher 11, Verdichter 10, Adsorber 9 und Gasleitung 13 handelt es sich um ein Kreisgassystem, insbesondere zur Rückgewinnung von Wasserstoff.

Ferner umfasst die Anlage 20 eine Vorrichtung 7 zur Silan-/ Halogensilan-Aufbereitung. Dieser Vorrichtung 7 werden über eine Leitung 14 die tiefsiedenden Bestandteile des Abgases zugeführt. Die Vorrichtung 7 hat die Aufgabe, die aus dem Abgas mittels Kondensationsstufen zurückgewonnenen Silan-/ Halogensilan-Gemische zu trennen. Das die Vorrichtung 7 über eine Leitung 8 verlassende Silan-/Halogensilan-Gemisch kann als Gas und/oder Flüssigkeit entweder in die Reaktoren 1 zurückgeführt oder für andere Prozesse verwendet werden.

Von der Abgasleitung 3 führen Probeentnahmeleitungen 5 zu einem Gaschromatograph 12. Ferner führt eine weitere Probeentnahmeleitung 6, die stromabwärts des Adsorbers 9 Proben des Kreisgases entnimmt, zum Gaschromatograph 12. Der Gaschromatograph 12 dient der Bestimmung des Stickstoffgehalts an verschiedenen Stellen des Kreisgassystems.

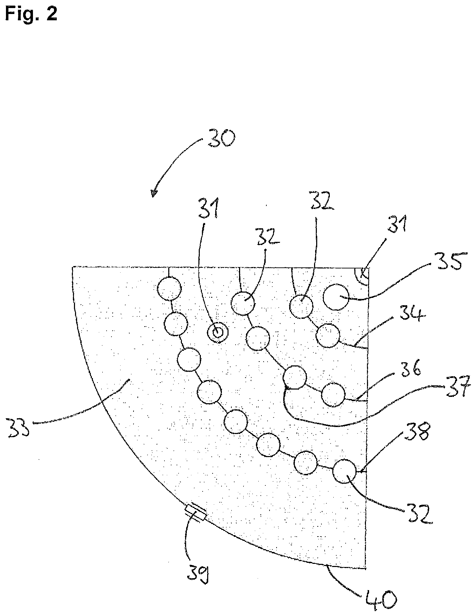

Fig. 2 zeigt einen Querschnittsausschnitt eines Siemens-Reaktors 30 zur Durchführung des erfindungsgemäßen Verfahrens. Im Reaktorinneren sind Siliciumstäbe 32 in Form von drei Stabkreisen 34, 36, 38 angeordnet. Der innere Stabkreis 34 weist insgesamt acht, der mittlere Stabkreis 36 insgesamt 16 und der äußere Stabkreis 38 insgesamt 32 Siliciumstäbe 32 auf. Das Reaktionsgas wird durch Düsen 31 in der Bodenplatte 33 des Reaktors 30 eingeleitet. Abgas wird durch einen Auslass 35 in der Bodenplatte 33 des Reaktors 30 abgeführt. Der Punkt 37 deutet eine Messfläche zur Bestimmung der mittleren Stabtemperatur bzw. der Abscheidetemperatur auf einem der Siliciumstäbe 32 an. Die Messung erfolgt mittels eines Pyrometers oder einer Wärmebildkamera (nicht dargestellt) durch ein Schauglas 39 in der Reaktorwand 40 auf einer der Reaktorwand 40 zugewandten Messfläche eines Siliciumstabes 32.

### Beispiele

Gemäß Tabelle 1 wurden verschiedene Polysiliciumstäbe (Beispiele 1 bis 13) nach dem erfindungsgemäßen Verfahren mit einem Stickstoffgehalt im Kreisgas von weniger als 1000 ppmv hergestellt (Beispiele 1, 4-6, 8, 10 bis 13). Zu Vergleichszwecken wurden ferner in einem baugleichen Reaktor Polysiliciumstäbe hergestellt, wobei der Stickstoffgehalt im Kreisgas bei oder über 1000 ppmv lag (Beispiele 2, 3, 7, 9). Die Stäbe wurden zerkleinert und Proben auf ihren Si₃N₄-Gehalt untersucht.

Im Fall der Beispiele 1, 2, 7 und 9 lag die Abscheidetemperatur unterhalb der für die Bildung von Si₃N₄ kritischen Abscheidetemperatur (Tₖ) von 1030°C. Im Fall der Beispiele 3 bis 6, 8, 10 bis 13 lag die Abscheidetemperatur oberhalb von Tₖ (Spalte 2, Tabelle 1).

Die Abscheidetemperatur wurde mittels eines Pyrometers auf einer Messfläche von 5 cm² wie unter Fig. 2 beschrieben bestimmt. Bei einer Reaktorhöhe von 4 m und einer Stablänge von 3 m betrug die Messhöhe etwa 1 m ausgehend von dem in der Elektrodenhalterung verankerten Ende des Stabes.

Die Hotspot-Temperatur lag zunächst an einem in einer Elektrodenhalterung verankerten Ende eines Stabes auf dem Stabkreis 34 (vgl. Fig. 2) in Richtung Reaktorzentrum. Sie wechselte mit zunehmender Abscheidezeit in eine oberflächliche Vertiefung eines Stabes des Stabkreises 36 (vgl. Fig. 2) auf einer Höhe von ca. 2,2 m in Richtung Reaktorzentrum. Im weiteren Abscheideverlauf bis zum Ende der Abscheidung wurde als Hotspot-Temperatur die Unterseite des Brückenbogens eines Stabes auf dem Stabkreis 36 (vgl. Fig. 2) identifiziert. Gemessen wurden diese Hotspot-Temperaturen über weitere Schaugläser mit Hilfe von Pyrometern oder Wärmebildkameras.

Sämtliche Polysiliciumstäbe wurden in einem Siemens-Reaktor wie in EP 2 077 252 A2 beschrieben hergestellt.

Der Stickstoffgehalt im Kreisgas (Spalte 4, Tabelle 1) wurde jeweils mit einem Gaschromatograph (GC) bestimmt (Prozess-GC: Siemens Maxum edition II; Trennsäule: RTX-1 Fused-Silica-Kapillar, Fa. Restek, Säulenlänge: 60 m). Die Probenentnahme erfolgte über eine Probenentnahmeleitung an der Abgasabführung.

Der Gehalt an Siliciumnitrid (Si₃N₄) in den erhaltenen Polysiliciumstäben wurde nach deren Zerkleinerung mittels SIMS (Sekundärionen-Massenspektrometrie)und eines Rasterelektronenmikroskops (REM) mit EDX-Analyseeinheit bestimmt. Dazu wurden jeweils mehrere Proben der erhaltenen Siliciumstäbe an 200 Stellen analysiert und die Maximalwerte bestimmt (Spalte 5, Tabelle 1). Ein Si₃N₄-Gehalt von 0% bedeutet, dass alle 200 Messungen unterhalb der Nachweisgrenze von 1 ppba lagen. Ein Gehalt von 1% bedeutet, dass 2 von 200 Messungen über dieser Nachweisgrenze lagen.

Um die Qualität der hergestellten Polysiliciumstäbe hinsichtlich der Herstellung von Folgeprodukten zu testen, wurden darüber hinaus Einkristalle nach dem Czochralski-Verfahren hergestellt.

Die Bestimmung des Versatzes (versatzfreie Stablänge; Spalte 7, Tabelle 1) wurde optisch beim Ziehen zum Einkristall durch eine Veränderung der Ziehkante beobachtet.

Die versatzfreie Stablänge (Ziehausbeute) ist der prozentuale Anteil der gesamten Stablänge, der frei von Versetzungsfehlern ist. Bei der Messung der gesamten Stablänge bleibt der während des Ziehprozesses entstehende Anfangs- und Endkonus unberücksichtigt. Relevant ist also nur die zylindrische Stablänge.

**Tabelle 1**

| Si-Stäbe/Beispiel | Abscheidetemperatur [°C] | Hotspot-temperatur [°C] | N₂ im Kreisgas [ppmv] | Si₃N₄ [%] | Stapelfehler pro cm² | versatzfreie Länge der Einkristalle [%] |
|---|---|---|---|---|---|---|
| 1 | 1030 | 1079 | 87 | 0 | 1 | 90 % |
| | (Tₖ - 0) | | | | | |
| 2 | 1030 | 1079 | 6400 | 0 | 3000 | 87 % |
| | (Tₖ - 0) | | | | | |
| 3 | 1068 | 1133 | 1000 | 1,5 | 120 | 55 % |
| | (Tₖ + 38) | | | | | |
| 4 | 1068 | 1134 | 650 | 1 | 115 | 71 % |
| | (Tₖ + 38) | | | | | |
| 5 | 1070 | 1136 | 0,4 | 0 | 1 | 89 % |
| | (Tₖ + 40) | | | | | |
| 6 | 1080 | 1150 | 550 | 0,5 | 116 | 80 % |
| | (Tₖ + 50) | | | | | |
| 7 | 1000 | 1040 | 1000 | 0 | 100 | 87% |
| | (Tₖ - 30) | | | | | |
| 8 | 1068 | 1133 | 94 | 0 | 20 | 90 % |
| | (Tₖ + 38) | | | | | |
| 9 | 1030 | 1079 | 1000 | 0 | 105 | 86 % |
| | (Tₖ - 0) | | | | | |
| 10 | 1068 | 1132 | 450 | 0,5 | 99 | 82 % |
| | (Tₖ + 38) | | | | | |
| 11 | 1080 | 1150 | 0,4 | 0 | 0 | 89 % |
| | (Tₖ + 50) | | | | | |
| 12 | 1150 | 1290 | 0,4 | 0 | 0 | 87% |
| | (Tk + 120) | | | | | |
| 13 | 1200 | 1375 | 0,4 | 0 | 0 | 85% |
| | (Tk + 170) | | | | | |

Die Anzahl der Stapelfehler (Spalte 6, Tabelle 1) in den erhaltenen Einkristallen wurde mit Hilfe einer Auszählung unter dem Lichtmikroskop bestimmt (Testmethode ASTM F416). Für die Stapelfehlerauszählungen wurden Testscheiben der Siliciumstäbe oxidiert. Anschließend wurde die Oxidschicht abgeätzt und die Defekte mit einer Strukturätze sichtbar gemacht. Die Auszählung der Defekte wurde unter einem Lichtmikroskop mit Hilfe einer Bilderkennungs-Software durchgeführt.

Die bei der Einkristallherstellung verwendeten Parameter waren für sämtliche Polysiliciumstäbe als Ausgangsmaterial identisch.

Im Fall der Beispiele 1,2, und 9, bei denen bei Tₖ (1030°C) abgeschieden wurde, ist festzustellen, dass unabhängig vom Stickstoffgehalt im Kreisgas kein Si₃N₄ nachgewiesen werden konnte. Auch bei einer Unterschreitung von Tₖ um 30°C und einem Stickstoffgehalt von 1000 ppmv (Beispiel 7) konnte kein Si₃N₄ nachgewiesen werden. Allerdings fällt auf, dass ein erhöhter Stickstoffgehalt im Kreisgas wie im Beispiel 2 von 6400 ppmv zu einer großen Anzahl von Stapelfehlern (3000) führt. Da die Hotspot-Temperatur bei den Beispielen 1, 2, 7 und 9 stets unterhalb der Bildungstemperatur von Si₃N₄ lag, wurde kein Si₃N₄ nachgewiesen. Im Beispiel 2 ist die hohe Stapelfehleranzahl aller Wahrscheinlichkeit nach auf den hohen N₂-Gehalt im Kreisgas und dessen inerte Einlagerung in das erhaltene Polysilicium zurückzuführen.

Anhand der Beispiele 3,4, 8 und 10 wird deutlich, wie sich der N₂-Gehalt im Kreisgas auf den Si₃N₄-Gehalt auswirkt. Die Stäbe in den Beispielen 3,4, 8 und 10 wurden alle bei einer Abscheidetemperatur von 38°C über Tₖ hergestellt, also bei 1068°C. Ein N₂-Gehalt von 1000 ppmv (Beispiel 3) führte zu einem Si₃N₄-Gehalt von 1,5%. Bei Verwendung dieser Si₃N₄-haltigen Siliciumstäbe für die Herstellung von Siliciumeinkristallen sind lediglich 55% der gesamten Stablänge versatzfrei. Eine Reduzierung des Stickstoffgehalts im Kreisgas um mehr als die Hälfte auf 450 ppmv wie im Beispiel 10 lässt den Si₃N₄-Gehalt der erhaltenen Stäbe auf 0,5% sinken und führt zu einkristallinem Silicium als Folgeprodukt mit 82% versatzfreier Länge. Bei den im Beispiel 8 bei einem Stickstoffgehalt von lediglich 94 ppmv hergestellten Stäben war kein Si₃N₄ nachweisbar. Entsprechend konnte einkristallines Silicium mit 90% versatzfreier Stablänge erhalten werden und das obwohl die Hotspot-Temperatur deutlich über der Bildungstemperatur von Si₃N₄ lag. Durch eine Steigerung der Abscheidetemperatur von 1030°C auf 1068°C oder sogar 1080°C (Beispiel 11) steigt die Abscheidegeschwindigkeit exponentiell um das Zweifache an und erhöht damit signifikant die Wirtschaftlichkeit des Prozesses.

In den Beispielen 5, 6 und 11 wurden Siliciumstäbe bei einer Abscheidetemperatur über Tₖ hergestellt. Die Stäbe gemäß Beispiel 5 (Tₖ + 38°C) wurden bei einem N₂-Gehalt im Kreisgas von lediglich 0,4 ppmv hergestellt, und es war kein Si₃N₄ nachweisbar. Im Folgeprodukt konnte eine versatzfreie Länge von 89% erzielt werden. Die Stäbe gemäß Beispiel 6 wurden bei einer Abscheidetemperatur von 1080°C bei einem N₂-Gehalt von 550 ppmv hergestellt. Dieser N₂-Gehalt in Kombination mit der hohen Abscheidetemperatur führte zu einem Si₃N₄-Gehalt von 0,5%. Entsprechend konnte im Folgeprodukt eine versatzfreie Länge von 80% erhalten werden. Die Stäbe im Beispiel 11 wurden ebenfalls bei 1080°C hergestellt. Allerdings betrug der N₂-Gehalt im Kreisgas lediglich 0,4 ppmv. Ähnlich wie im Beispiel 5 konnte kein Si₃N₄ mehr nachgewiesen werden, und die versatzfreie Länge des Folgeprodukts betrug 89%.

Die Stäbe in den Beispielen 12 und 13 wurden bei Abscheidetemperaturen deutlich über Tₖ abgeschieden (Tₖ + 120°C und Tₖ + 170°C). Der N₂-Gehalt im Kreisgas betrug ebenfalls lediglich 0,4 ppmv. Wie im Beispiel 11 konnten weder Si₃N₄ noch Stapelfehler nachgewiesen werden. Trotz der hohen Hotspot-Temperaturen von 1290°C bzw. 1375°C verhinderte der niedrige N₂-Geahlt im Kreisgas die Entstehung von Si₃N₄.

Durch den bestehenden exponentiellen Zusammenhang zwischen der Abscheidetemperatur und der Abscheidegeschwindigkeit sind Geschwindigkeitssteigerungen bis zu einem Faktor von 2-3 möglich und senken somit sowohl die Herstellungskosten als auch die spezifischen Investitionskosten deutlich.

## Patentansprüche

1. Verfahren zur Herstellung von polykristallinem Silicium, umfassend Einleiten eines Wasserstoff und Silan und/oder Halogensilan enthaltenden Reaktionsgases in einen Reaktor, wobei der Reaktor mindestens einen erhitzten Trägerkörper umfasst, auf welchem mittels Pyrolyse elementares Silicium unter Bildung des polykristallinen Siliciums abgeschieden wird, und wobei in einem kontinuierlichen Prozess Abgas aus dem Reaktor abgeführt und aus diesem Abgas zurückgewonnener Wasserstoff als Kreisgas wieder dem Reaktor zugeführt wird, **dadurch gekennzeichnet, dass** das Kreisgas einen Stickstoffgehalt von weniger als 1000 ppmv aufweist.

2. Verfahren nach Anspruch 1, **dadurch gekennzeichnet, dass** der Stickstoffgehalt weniger als 500 ppmv, bevorzugt weniger als 100 ppmv, besonders bevorzugt weniger als 10 ppmv, insbesondere weniger als 0,5 ppmv, beträgt.

3. Verfahren nach Anspruch 1 oder 2, **dadurch gekennzeichnet, dass** die Abscheidung des Siliciums bei einer Abscheidetemperatur zwischen 1030 und 1300°C, bevorzugt zwischen 1032 und 1250°C, besonders bevorzugt zwischen 1040 und 1200°C, insbesondere zwischen 1060 und 1150°C, erfolgt.

4. Verfahren nach einem der vorhergehenden Ansprüche, **dadurch gekennzeichnet, dass** während des Verfahrens der Stickstoffgehalt des Kreisgases mittels einer Messvorrichtung, insbesondere Gaschromatograph, bestimmt wird.

5. Verfahren nach einem der vorhergehenden Ansprüche, **dadurch gekennzeichnet, dass** bei Überschreiten eines Stickstoffgrenzwerts zwischen 0,01 und 1000 ppmv entweder eine Abschaltung des Reaktors erfolgt oder die Zufuhr des Kreisgases unterbrochen und das Verfahren so lange mit externem Wasserstoff durchgeführt wird, bis der Stickstoffgrenzwert unterschritten ist.

6. Verfahren nach einem der vorhergehenden Ansprüche, **dadurch gekennzeichnet, dass** bei Überschreiten eines Stickstoffgrenzwerts zwischen 0,01 und 1000 ppmv die Abscheidetemperatur reduziert wird bis der Stickstoffgrenzwert unterschritten ist.

7. Verfahren nach einem der vorhergehenden Ansprüche, **dadurch gekennzeichnet, dass** dem Kreisgas weniger als 90%, bevorzugt weniger als 40%, besonders bevorzugt weniger als 10%, externer Wasserstoff zugesetzt wird.

8. Verfahren nach einem der vorhergehenden Ansprüche, **dadurch gekennzeichnet, dass** es sich bei dem Halogensilan um ein Chlorsilan, insbesondere Trichlorsilan, oder ein Gemisch aus Dichlorsilan und Trichlorsilan, handelt.

9. Verfahren nach einem der vorhergehenden Ansprüche, **dadurch gekennzeichnet, dass** vor Beginn des Verfahrens innerhalb des Reaktors ein Druckaufbau mit Wasserstoff gefolgt von einem Druckabbau erfolgt, wobei ein Maximaldruck beim Druckaufbau im Bereich zwischen 3,1 und 15,0 bar, insbesondere zwischen 6,0 und 8,0 bar, liegt und ein Minimaldruck beim Druckabbau im Bereich zwischen 1,1 und 3 bar, insbesondere bei etwa 1,4 bar, liegt.

10. Verfahren nach Anspruch 9, **dadurch gekennzeichnet, dass** der Druckaufbau und der Druckabbau jeweils zwischen 1 und 60 min dauern.

11. Verfahren nach Anspruch 9 oder 10, **dadurch gekennzeichnet, dass** der Druckaufbau mit einem Wasserstoffvolumenstrom pro Reaktorvolumen *V_{R}* zwischen 5 und 400 m³/hV_{R}, bevorzugt zwischen 8 und 200 m³/hV_{R}, besonders bevorzugt zwischen 10 und 100 m³/hV_{R}, insbesondere von etwa 20 m³/hV_{R}, erfolgt.

## Claims

1. Process for producing polycrystalline silicon, which comprises introducing a reaction gas comprising hydrogen and silane and/or halosilane into a reactor, the reactor comprising at least one heated carrier body on which elemental silicon is deposited by means of pyrolysis to form the polycrystalline silicon, and where, in a continuous operation, offgas is taken off from the reactor and hydrogen recovered from this offgas is resupplied to the reactor as recycle gas, **characterized in that** the recycle gas has a nitrogen content of less than 1000 ppmv.

2. Process according to Claim 1, **characterized in that** the nitrogen content is less than 500 ppmv, preferably less than 100 ppmv, more preferably less than 10 ppmv, more particularly less than 0.5 ppmv.

3. Process according to Claim 1 or 2, **characterized in that** the silicon is deposited at a deposition temperature of between 1030 and 1300°C, preferably between 1032 and 1250°C, more preferably between 1040 and 1200°C, more particularly between 1060 and 1150°C.

4. Process according to any of the preceding claims, **characterized in that** during the process the nitrogen content of the recycle gas is determined by means of a measuring facility, more particularly a gas chromatograph.

5. Process according to any of the preceding claims, **characterized in that** if a nitrogen value limit of between 0.01 and 1000 ppmv is exceeded either the reactor is shut down or the supply of the recycle gas is interrupted and the process is carried out with external hydrogen until the nitrogen value is below the limit.

6. Process according to any of the preceding claims, **characterized in that** if a nitrogen value limit of between 0.01 and 1000 ppmv is exceeded the deposition temperature is reduced until the nitrogen value is below the limit.

7. Process according to any of the preceding claims, **characterized in that** the recycle gas is admixed with less than 90%, preferably less than 40%, more preferably less than 10% of external hydrogen.

8. Process according to any of the preceding claims, **characterized in that** the halosilane is a chlorosilane, more particularly trichlorosilane, or a mixture of dichlorosilane and trichlorosilane.

9. Process according to any of the preceding claims, **characterized in that** before the start of the process within the reactor there is a pressure increase with hydrogen followed by a pressure decrease, where a maximum pressure during the pressure increase is in the range between 3.1 and 15.0 bar, more particularly between 6.0 and 8.0 bar, and a minimum pressure during the pressure decrease is in the range between 1.1 and 3 bar, more particularly at about 1.4 bar.

10. Process according to Claim 9, **characterized in that** the pressure increase and the pressure decrease each last between 1 and 60 min.

11. Process according to Claim 9 or 10, **characterized in that** the pressure increase takes place with a hydrogen volume flow rate per unit reactor volume *V_{R}* of between 5 and 400 m³/hV_{R}, preferably between 8 and 200 m³/hV_{R}, more preferably between 10 and 100 m³/hV_{R}, more particularly of about 20 m³/hV_{R}.

## Revendications

1. Procédé de fabrication de silicium polycristallin, comprenant l'introduction d'un gaz réactionnel contenant de l'hydrogène et un silane et/ou halogénosilane dans un réacteur, le réacteur comprenant au moins un corps support chauffé, sur lequel du silicium élémentaire est déposé par pyrolyse avec formation du silicium polycristallin, et un gaz d'échappement étant déchargé du réacteur dans un procédé continu, et l'hydrogène récupéré à partir de ce gaz d'échappement étant réintroduit dans le réacteur en tant que gaz circulaire, **caractérisé en ce que** le gaz circulaire présente une teneur en azote de moins de 1 000 ppmv.

2. Procédé selon la revendication 1, **caractérisé en ce que** la teneur en azote est de moins de 500 ppmv, de préférence de moins de 100 ppmv, de manière particulièrement préférée de moins de 10 ppmv, notamment de moins de 0,5 ppmv.

3. Procédé selon la revendication 1 ou 2, **caractérisé en ce que** le dépôt du silicium a lieu à une température de dépôt comprise entre 1 030 et 1 300 °C, de préférence entre 1 032 et 1 250 °C, de manière particulièrement préférée entre 1 040 et 1 200 °C, notamment entre 1 060 et 1 150 °C.

4. Procédé selon l'une quelconque des revendications précédentes, **caractérisé en ce que**, pendant le procédé, la teneur en azote du gaz circulaire est déterminée au moyen d'un dispositif de mesure, notamment par chromatographie gazeuse.

5. Procédé selon l'une quelconque des revendications précédentes, **caractérisé en ce qu'**en cas de dépassement d'une valeur seuil d'azote entre 0,01 et 1 000 ppmv, soit un arrêt du réacteur a lieu, soit l'introduction du gaz circulaire est interrompue, et le procédé est réalisé avec de l'hydrogène externe jusqu'à passer en dessous de la valeur seuil d'azote.

6. Procédé selon l'une quelconque des revendications précédentes, **caractérisé en ce qu'**en cas de dépassement d'une valeur seuil d'azote comprise entre 0,01 et 1 000 ppmv, la température de dépôt est réduite jusqu'à passer en dessous de la valeur seuil d'azote.

7. Procédé selon l'une quelconque des revendications précédentes, **caractérisé en ce que** moins de 90 %, de préférence moins de 40 %, de manière particulièrement préférée moins de 10 %, d'hydrogène externe est ajouté au gaz circulaire.

8. Procédé selon l'une quelconque des revendications précédentes, **caractérisé en ce que** l'halogénosilane est un chlorosilane, notamment le trichlorosilane, ou un mélange de dichlorosilane et de trichlorosilane.

9. Procédé selon l'une quelconque des revendications précédentes, **caractérisé en ce qu'**avant le début du procédé, une montée en pression a lieu dans le réacteur avec de l'hydrogène, suivie par une décompression, une pression maximale lors de la montée en pression se situant dans la plage comprise entre 3,1 et 15,0 bar, notamment entre 6,0 et 8,0 bar, et une pression minimale lors de la décompression se situant dans la plage comprise entre 1,1 et 3 bar, notamment à environ 1,4 bar.

10. Procédé selon la revendication 9, **caractérisé en ce que** la montée en pression et la décompression durent chacune entre 1 et 60 minutes.

11. Procédé selon la revendication 9 ou 10, **caractérisé en ce que** la montée en pression a lieu avec un débit volumique d'hydrogène par volume de réacteur V_{R} compris entre 5 et 400 m³/hV_{R}, de préférence entre 8 et 200 m³/hV_{R}, de manière particulièrement préférée entre 10 et 100 m³/hV_{R}, notamment d'environ 20 m³/hV_{R}.
